# EUROPÄISCHE PATENTSCHRIFT

(11) **EP 1 299 274 B1**
(45) Veröffentlichungstag und Bekanntmachung des Hinweises auf die Patenterteilung: **12.04.2006**
(21) Anmeldenummer: 01949396.4
(22) Anmeldetag: 09.06.2001
(51) Int. Cl.: B60S 1/52

(54) **BEHEIZBARE SCHEIBENWASCHDÜSE**
HEATABLE WINDSCREEN WASHER JET
GICLEUR DE LAVE-GLACE CHAUFFANT

(30) Priorität: 30.06.2000 DE 10031088
(43) Veröffentlichungstag der Anmeldung: 09.04.2003
(73) Patentinhaber: A. Raymond & Cie, 38019 Grenoble (FR)
(72) Erfinder: UTZ, Daniel, 79415 Bad Bellingen (DE); LESSER, Hans-Jürgen, 79618 Rheinfelden (DE)
(74) Vertreter: Rüttgers, Joachim
(86) Internationale Anmeldenummer: PCT/EP2001/006555
(87) Internationale Veröffentlichungsnummer: WO 2002/002378

(56) Entgegenhaltungen:
- DE-A- 19 833 142

## Beschreibung

Die Erfindung geht aus von einer beheizbaren Scheibenwaschdüse zur Befestigung am Scheibenwischer eines Kraftfahrzeugs nach dem Oberbegriff des Anspruchs 1. Eine solche Scheibenwaschdüse ist beispielsweise bekannt aus DE 198 33 142 A1. Das Düsengehäuse wird hierbei mittels einer Klemmvorrichtung am Wischerarm befestigt und besitzt zudem einen Anschlußstutzen für einen beheizbaren Spritzwasserschlauch, wobei die Heizdrähte entlang der Wasserleitung im Schlauchmantel eingebettet, d.h. eingeformt sind. Das Heizelement sitzt im Gehäuse in einer separaten Kammer oberhalb der Spritzdüsen und wird mit den aus dem Schlauch hervorstehenden Enden der Heizdrähte durch direkten Steckkontakt verbunden. Danach wird die hochgestellte Klappe über das Heizelement heruntergeschwenkt und am Gehäuserand verrastet.

Ziel dieser Waschdüsen - Anordnung ist es, das Heizelement möglichst nahe an die Waschdüsen heranzubringen, um dadurch eine bestmögliche Beheizung der Spritzflüssigkeit bis in die Waschdüse hinein zu erreichen und so das Spritzwasser auch bei Außentemperaturen unterhalb des Gefrierpunktes flüssig zu halten. Da das Heizelement aber mit dem Heizdraht über einen Steckkontakt verbunden ist, muß der spritzwasserführende Kanal mit den Düsen von dem Heizelement mit dem Steckkontakt im Gehäuse durch eine Zwischenwand getrennt werden, wodurch die Wärme des Heizelementes nur zum Teil, d.h. geschwächt an das Spritzwasser weitergegeben wird. Auch ist die Herstellung der elektrischen Verbindung über den Steckkontakt etwas umständlich, weil hierzu die beiden Heizdrähte zunächst aus dem Schlauchende herausgeführt und dann mit einem Stecker verlötet werden müssen.

Aufgabe der Erfindung ist es, den Wärmeübergang von den Heizdrähten zum Heizelement zu vereinfachen und die Wärmeabgabe an das Spritzwasser in der Düse gleichzeitig zu verbessern. Diese Aufgabe wird erfindungsgemäß dadurch gelöst, daß unmittelbar über dem Düsenkörper eine die Chipfläche voll abdeckende Heizplatte angeordnet ist, welche mit einem am Plattenrand angeformten Steg in den Anschlußstutzen hineinragt, und daß beim Aufstecken auf den Anschlußstutzen des beheizbaren Spritzwasserschlauches die elektrisch überbrückten Enden der Heizdrähte sich berührungslos über den Steg der Heizplatte erstrecken.

Hierdurch wird erreicht, daß die durch die Heizdrähte im Heizdraht erzeugte Wärme ohne direkte Berührung mit dem Steg auf die Heizplatte übertragen wird, und daß ferner die erwärmte Heizplatte ihre Wärme direkt an das Spritzwasser abgeben kann, und zwar bis an das Ende der Kanalrinnen, so daß eine optimale Erwärmung des Spritzwassers gewährleistet ist.

Diese und weitere Merkmale der Erfindung, welche in den Unteransprüchen angegeben sind, sollen an dem in der Zeichnung dargestellten Ausführungsbeispiel der Erfindung näher erläutert werden. Es zeigt
- Fig. 1: die beheizbare Waschdüse in seinen Einzelteilen in einer perspektivischen Explosionsdarstellung,
- Fig. 2: die zusammengebaute Waschdüse in perspektivischer Darstellung,
- Fig. 3: die auf einen Wischerarm montierte Waschdüse beim Bespritzen einer Fensterscheibe,
- Fig. 4: die zusammengebaute Waschdüse in Seitenansicht mit Schnitt durch den auf den Anschlußstutzen aufgesteckten Wasserschlauch,
- Fig. 5: die zusammengebaute Waschdüse in Draufsicht mit Schnitt durch das Waschdüsengehäuse gemäß Linie V - V in Fig. 4 und
- Fig. 6: die gleiche Waschdüse in Vorderansicht mit Schnitt durch den Anschlußstutzen gemäß Linie VI - VI in Fig. 4.

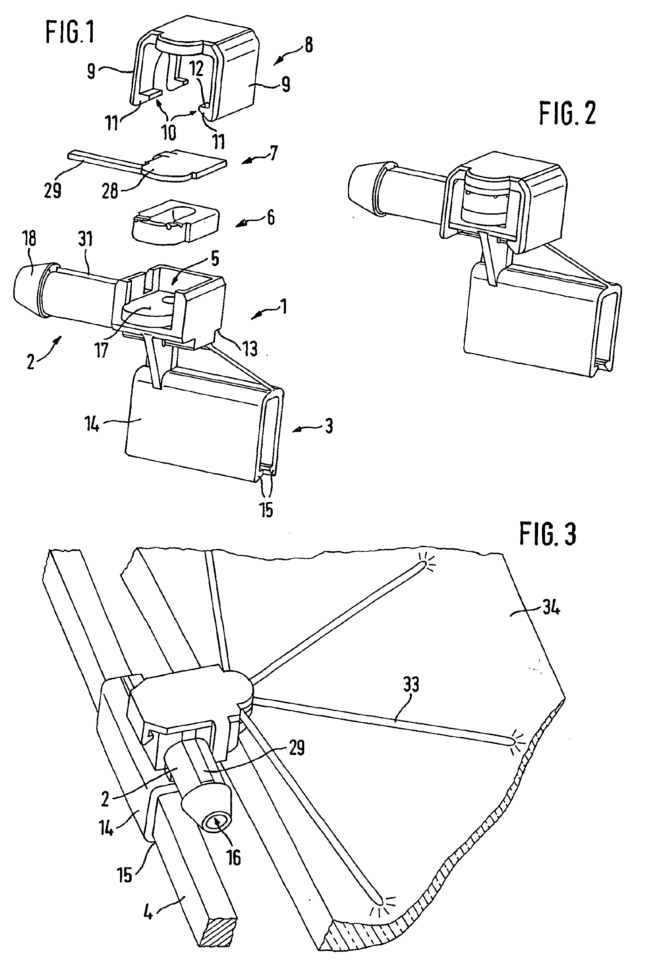

Die in den Figuren dargestellte Scheibenwaschdüse besteht aus einem Gehäuse **1** mit seitlich angeformtem Anschlußstutzen **2** und einer ebenfalls angeformten Klemmvorrichtung **3** zum Aufstecken des Gehäuses **1** auf den Wischerarm **4** eines Scheibenwischers für Kraftfahrzeuge. Das Gehäuse **1** besitzt eine nach oben offene Kammer **5** zum Einlagern eines Düsenkörpers **6** sowie einer Heizplatte **7.** Die Kammer **5** wird von einem Deckel **8** verschlossen, der mit zwei einander gegenüberliegenden, seitlich angeformten Seitenwänden **9** einstückig verbunden ist. An den freien Enden der elastisch auffederbaren Seitenwände **9** sind - mit ihren Spitzen **10** gegeneinandergerichtete - Rastkanten **11** vorgesehen, welche mit etwa rechtwinklig abstehenden Rastflächen **12** den unteren Gehäuserand **13** nach dem Aufdrücken des Deckels **8** hintergreifen und dadurch die Kammer **5** verschlossen halten (siehe **Fig.2**).

Die am Gehäuse **1** angeformte Klemmvorrichtung **3** besitzt zwei auffederbare Klemmschenkel **14** mit an den freien Enden angeformten, gegeneinander gerichteten Rastkanten **15.** Diese Klemmschenkel **14** sind im Abstand voneinander und in der Lage der Rastkanten **15** dem Querschnitt des Scheibenwischerarms **4** angepaßt und am Gehäuse **1** so angeformt, daß nach dem Aufstecken der Klemmschenkel **14** auf den Wischerarm **4** der Anschlußstutzen **2** etwa parallel zum Wischerarm **4** gerichtet und durch geeignete Fixiermittel in axialer Richtung gesichert ist.

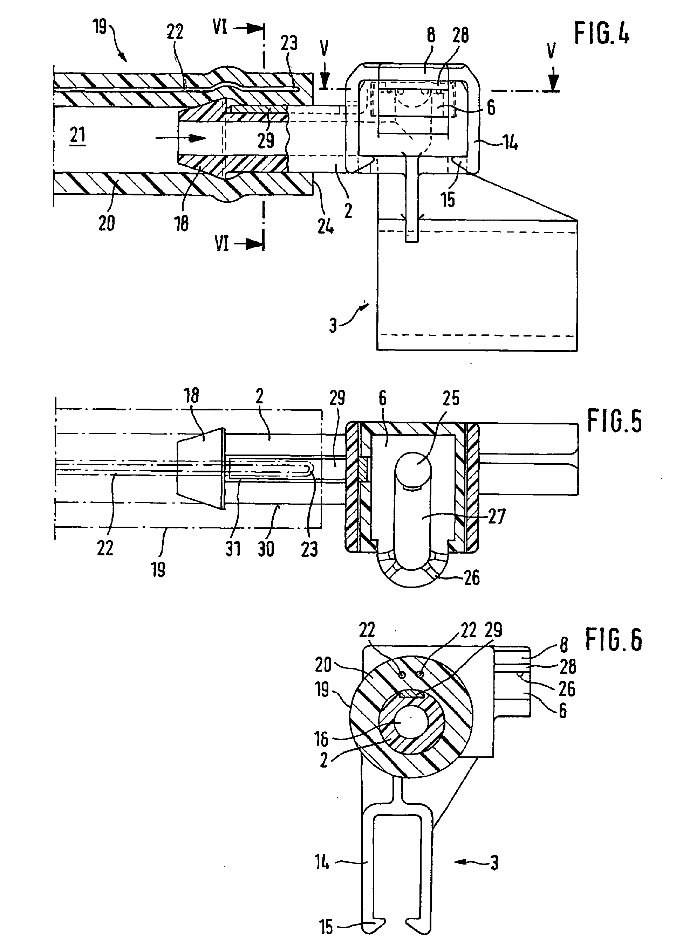

Der Anschlußstutzen **2** dient zur Zufuhr des Spritzwassers in die Kammer **5** des Düsengehäuses **1** und ist zu diesem Zweck mit einer zentralen Durchgangsbohrung **16** versehen, welche am Boden **17** der Kammer **5** hervortritt. Der zylindrische Stutzen **2** besitzt an seinem freien Ende eine konisch auseinanderstrebende Einführwand **18,** über welche der elastisch aufweitbare Wasserschlauch **19** aufgeschoben wird. Im Schlauchmantel **20** des Wasserschlauchs **19** sind entlang der Wasserleitung **21** elektrisch beheizbare Drähte **22** eingeformt, deren Enden **23** kurz vor dem Schlauchende **24** überbrückt sind (siehe Fig.4 und 5). Anstelle von Heizdrähten **22** können im Spritzwasserschlauch **19** auch elektrische Drahtgewebe eingeformt sein, welche den Schlauch **19** ebenfalls auf seiner ganzen Länge beheizen.

Der Düsenkörper **6** ist vorzugsweise als flacher Chip ausgebildet und mit einer zentralen Durchflußöffnung **25** für das Spritzwasser versehen, welche mit der Durchgangsbohrung **16** des Anschlußstutzens **2** in Verbindung steht. An der aus der Kammer **5** vorstehenden halbrunden Vorderseite des Chips sind mehrere Kanalrinnen **26** fächerförmig nach außen geführt, welche über eine zentrale breitere Rinne **27** mit der Durchflußöffnung **25** in Verbindung stehen (siehe **Fig.5**). Durch diese Kanalrinnen **26** verläßt das Spritzwasser den Düsenkörper **6** und bespritzt die Glasscheibe **34** mit sogenannten Mikrostrahlen **33** (siehe Fig.3).

Die Oberseite des Düsenkörpers **6** wird nach dem Zusammenbau von der Heizplatte **28** voll abgedeckt und von dieser wasserdicht abgeschlossen. Am Rand der Heizplatte **28** ist ein schmaler Steg **29** angeformt, welcher im eingebauten Zustand bis in den Anschlußstutzen **2** hineinreicht. Zur Aufnahme des Steges **29** ist im Außenmantel **30** des Anschlußstutzens **2** eine Nut **31** eingelassen. Der Steg **29** ist vorzugsweise in seiner Stärke so bemessen, daß die Oberfläche des Stegs **29** mit dem Außenmantel **30** bündig abschließt (siehe **Fig.6**).

Beim Anschließen des Spritzwasserschlauchs **19** wird das Ende **24** so auf den Anschlußstutzen **2** aufgeschoben, daß die beiden zusammengeführten Enden **23** der Heizdrähte **22** parallel zum Steg **29** der Heizplatte **28** verlaufen, ohne sich zu berühren. Die durch die Heizdrähte **22** erzeugte Wärme schützt somit das Spritzwasser bei Temperaturen unter dem Gefrierpunkt nicht nur im Schlauch **19** über die ganze Schlauchlänge vor dem Gefrieren, sondern reicht auch noch, um genügend Wärme über den Steg **29** an die Heizplatte **28** abzugeben, so daß das Spritzwasser bis an das Ende der Kanalrinnen **26** vor dem Gefrieren bewahrt wird.

### Bezugszeichenliste

- 1: Gehäuse
- 2: Anschlußstutzen
- 3: Klemmvorrichtung
- 4: Scheibenwischerarm
- 5: Kammer
- 6: Düsenkörper
- 7: Heizelement
- 8: Deckel
- 9: Seitenwände
- 10: Spitzen
- 11: Rastkanten
- 12: Rastflächen
- 13: Unterer Gehäuserand
- 14: Klemmschenkel
- 15: Rastkanten
- 16: Durchgangsbohrung
- 17: Kammerboden
- 18: Einführwand
- 19: Wasserschlauch
- 20: Schlauchmantel
- 21: Wasserleitung
- 22: Heizdrähte
- 23: Heizdrahtende
- 24: Schlauchende
- 25: Wasserdurchflußöffnung
- 26: Kanalrinnen
- 27: Breitere Rinne
- 28: Heizplatte
- 29: Steg
- 30: Außenmantel
- 31: Nut
- 32: Plattenrand
- 33: Mikrostrahl
- 34: Glasscheibe

## Patentansprüche

1. Beheizbare Scheibenwaschdüse zur Befestigung am Scheibenwischer eines Kraftfahrzeuges, bestehend aus einem Gehäuse (1) mit einem Anschlußstutzen (2) für einen über elektrisch leitfähige Drähte oder Drahtgewebe beheizbaren Spritzwasserschlauch (19), aus einer Klemmvorrichtung (3) zum Aufstekken des Gehäuses (1) auf einen Wischerarm (4), aus einer Kammer (5) zum Einlagern eines Düsenkörpers (6), aus einem oberhalb des Düsenkörpers (6) positionierbaren und über die Heizdrähte (22) der Spritzwasserleitung (21) erwärmbaren Heizelement (7) sowie aus einem Deckel (8) zum Verschließen der Kammer (5), wobei der Düsenkörper (6) als flacher Chip ausgebildet ist, bei dem mehrere Kanalrinnen (26) von einer mit dem Anschlußstutzen (2) in Verbindung stehenden zentralen Wasserdurchflußöffnung (25) fächerförmig nach außen geführt sind, **dadurch gekennzeichnet, daß** unmittelbar über dem Düsenkörper (6) eine die Chipfläche voll abdeckende Heizplatte (28) angeordnet ist, welche mit einem am Plattenrand (32) angeformten Steg (29) in den Anschlußstutzen (2) hineinragt, und daß beim Aufstecken des beheizbaren Spritzwasserschlauches (19) auf den Anschlußstutzen (2) die elektrisch überbrückten Enden (23) der Heizdrähte (22) sich berührungslos über den Steg (29) der Heizplatte (28) erstrecken.

2. Beheizbare Scheibenwaschdüse nach Anspruch 1, **dadurch gekennzeichnet, daß** der Steg (29) in einer im Außenmantel (30) des Anschlußstutzens (2) eingelassenen Nut (31) eingebettet ist.

3. Beheizbare Scheibenwaschdüse nach Anspruch 2, **dadurch gekennzeichnet, daß** der Steg (29) mit dem Außenmantel (30) bündig abschließt.

4. Beheizbare Scheibenwaschdüse nach einem der Ansprüche 1 bis 3, **dadurch gekennzeichnet, daß** die nach oben offenen Kanalrinnen (26) von der Heizplatte (28) wasserdicht abgeschlossen werden.

## Claims

1. Heatable windscreen washer nozzle for attachment to the windscreen wiper of a motor vehicle, comprising a housing (1) with a connecting piece (2) for a water jet hose (19) heatable by means of electrically conductive wires or wire mesh, comprising a clamping device (3) for attaching the housing (1) to a wiper arm (4), comprising a chamber (5) for inserting a nozzle body (6), a heating element (7) positionable above the nozzle body (6) and heatable by means of the heating wires (22) of the water jet line (21) and a cover (8) for closing the chamber (5), wherein the nozzle body (6) is designed as a flat chip wherein a plurality of channel conduits (26) lead outwardly in a fan shape from a central water outlet opening (25) connected to the connecting piece (2), **characterised in that** arranged directly above the nozzle body (6) is a heating plate (28) completely covering the chip surface, said heating plate extending with a web (29) formed on the plate edge (32) into the connecting piece (2), and that on pushing the heatable water jet hose (19) onto the connecting piece (2) the electrically bridged ends (23) of the heating wires (22) extend without physical contact over the web (29) of the heating plate (28).

2. Heatable windscreen washer nozzle according to claim 1, **characterised in that** the web (29) is embedded in a groove (31) let into the outer jacket (30) of the connecting piece (2).

3. Heatable windscreen washer nozzle according to claim 2, **characterised in that** the web (29) terminates flush with the outer jacket (30).

4. Heatable windscreen washer nozzle according to one of the claims 1 to 3, **characterised in that** the upwardly open channel conduits (26) are closed off in watertight manner by the heating plate (28).

## Revendications

1. Buse de lave-glace chauffante destinée à être montée sur l'essuie-glace d'un véhicule automobile, se composant d'un boîtier (1) muni d'une tubulure de raccordement (2) pour un flexible d'alimentation en eau de projection (19) susceptible d'être chauffé au moyen de fils ou de résilles faites de fils métalliques électriquement conducteurs, d'un dispositif de bridage en position (3) servant à emmancher le boîtier (1) sur le bras (4) d'un essuie-glace, d'une enceinte (5) dans laquelle est logée un corps de buse (6), d'une résistance chauffante (7) destinée à être placée au-dessus du corps de buse (6) et à être chauffée par les fils chauffants (22) de la conduite d'amenée de l'eau de projection (21), ainsi que d'un couvercle (8) servant à obturer l'enceinte (5), le corps de buse (6) se présentant en l'occurrence sous la forme d'une pastille plate, dans laquelle plusieurs canaux en forme de goulotte s'étendent vers l'extérieur, selon une disposition en éventail, depuis une ouverture d'écoulement de l'eau (25) raccordée à la tubulure de raccordement (2), **caractérisée en ce que** directement au-dessus du corps de buse (6) est disposée une plaquette chauffante (28) qui recouvre complètement la surface de la pastille, qui fait saillie, par une barrette entretoise (29) réalisée solidaire par moulage du bord (32) de la plaquette, à l'intérieur de la tubulure de raccordement (2) et **en ce que**, lors de l'emmanchement du flexible d'alimentation en eau de projection chauffant (19) sur la tubulure de raccordement (2) les extrémités (23) électriquement pontées des fils chauffants (22) s'étendent sans contact au-dessus de la barrette entretoise (29) de la plaquette chauffante (28).

2. Buse de lave-glace chauffante selon la revendication 1, **caractérisée en ce que** la barrette entretoise (29) est disposée dans une rainure (31) ménagée dans l'enveloppe extérieure (30) de la tubulure de raccordement (2).

3. Buse de lave-glace chauffante selon la revendication 2, **caractérisée en ce que** la barrette entretoise (29) vient en affleurement de la surface de l'enveloppe extérieure (30).

4. Buse de lave-glace chauffante selon l'une des revendications 1 à 3, **caractérisée en ce que** les canaux en forme de goulotte ouverts vers le haut (26) sont fermés de manière étanche à l'eau par la plaquette chauffante (28).
